# NOUVEAU FASCICULE DE BREVET EUROPEEN

(11) **EP 2 805 020 B2**
(45) Date de publication et mention de la décision concernant l'opposition: **19.10.2022**
(45) Mention de la délivrance du brevet: 06.04.2016
(21) Numéro de dépôt: 13704162.0
(22) Date de dépôt: 16.01.2013
(51) Int. Cl.: F01D 5/22, F01D 5/28

(54) **Aube mobile de turbomachine et turbomachine correspondante**
Turbomaschinenlaufschaufel und zugehörige Turbomaschine
Turbomachine rotor blade and corresponding turbomachine

(30) Priorité: 17.01.2012 FR 1250435; 14.06.2012 FR 1255586
(43) Date de publication de la demande: 26.11.2014
(73) Titulaire: Safran Aircraft Engines, 75015 Paris (FR)
(72) Inventeur: BENSALAH, Slim, F-77550 Moissy-cramayel Cedex (FR); NEGRI, Arnaud, F-77550 Moissy-cramayel Cedex (FR); DIGARD BROU DE CUISSART, Sébastien, F-77550 Moissy-cramayel Cedex (FR); KLEIN, Guillaume, F-77550 Moissy-cramayel Cedex (FR); TANG, Ba-Phuc, F-77550 Moissy-cramayel Cedex (FR); MATHIEU, David, F-77550 Moissy-cramayel Cedex (FR); DOREMUS, Sibylle, F-77550 Moissy-cramayel Cedex (FR)
(74) Mandataire: Cabinet Beau de Loménie
(86) Numéro de dépôt international: PCT/FR2013/050096
(87) Numéro de publication internationale: WO 2013/107982

(56) Documents cités:
- EP-A1- 2 402 559
- EP-A2- 1 936 119
- WO-A1-03/029616
- FR-A1- 2 923 524
- JP-A- 2004 150 272
- US-A- 5 083 903
- US-A- 5 660 320
- US-A1- 2005 063 827
- US-B2- 7 771 171

## Description

### DOMAINE DE L'INVENTION

Le présent exposé concerne une aube mobile de turbomachine.

Une telle aube peut équiper tout type de turbomachine, terrestre ou aéronautique, et notamment un turboréacteur d'avion ou un turbomoteur d'hélicoptère.

### ETAT DE LA TECHNIQUE ANTERIEURE

Dans le présent exposé, l'amont et l'aval sont définis par rapport au sens d'écoulement normal du gaz (de l'amont vers l'aval) à travers la turbomachine.

On appelle "axe de la turbomachine" ou "axe moteur", l'axe de rotation du rotor de la turbomachine. La direction axiale correspond à la direction de l'axe de la turbomachine et une direction radiale est une direction perpendiculaire à l'axe de la turbomachine et coupant cet axe. De même, un plan axial est un plan contenant l'axe de la turbomachine, et un plan radial est un plan perpendiculaire à cet axe.

Sauf précision contraire, les adjectifs "intérieur" et "extérieur" sont utilisés en référence à une direction radiale de sorte que la partie intérieure d'un élément est, suivant une direction radiale, plus proche de l'axe de la turbomachine que la partie extérieure du même élément.

Typiquement, une aube mobile de turbomachine comprend une pale s'étendant suivant l'axe d'empilement de l'aube, entre les extrémités proximale et distale (i.e. intérieure et extérieure) de l'aube. A son extrémité proximale, l'aube comprend un pied par lequel elle est fixée à un disque du rotor de la turbomachine, ce disque étant commun à plusieurs aubes. La pale permet de récupérer les efforts des gaz traversant la turbomachine pour les transmettre au disque de rotor. A son extrémité distale, l'aube peut comprendre un élément transversal, appelé talon. Lorsque plusieurs aubes mobiles sont fixées sur un disque de rotor, leurs talons sont disposés bord à bord de manière à former une couronne circonférentielle qui a notamment pour fonction de délimiter extérieurement la veine d'écoulement du gaz traversant la turbomachine et de limiter ainsi les fuites de gaz à cet endroit. Les aubes mobiles sont généralement fabriquées avec un angle de pré-torsion. Lors du montage des aubes, celles-ci sont montées en force pour rendre cet angle de pré-torsion nul, ce qui assure le contact entre les talons des aubes, donne de la rigidité à la roue d'aubes et limite les vibrations.

L'axe d'empilement d'une aube est l'axe perpendiculaire à l'axe de la turbomachine, qui passe par le centre de gravité de la section la plus intérieure de la pale de l'aube (i.e. la section la plus proche de l'axe de la turbomachine).

La pale de l'aube présente une face d'intrados et une face d'extrados. Les côtés d'intrados et d'extrados de l'aube sont définis en correspondance avec ces faces.

Une aube mobile conventionnelle est représentée sur la FIG 1. Une aube de ce type est décrite dans le document de brevet FR 2923524 A1. Cette aube 10 comprend une pale 16 s'étendant suivant l'axe d'empilement X de l'aube, entre les extrémités proximale 10A et distale 10B de l'aube. La pale 16 présente une face d'intrados 15A et une face d'extrados. A son extrémité proximale 10A, l'aube comprend un pied 12 par lequel elle est fixée à un disque du rotor (non représenté). A son extrémité distale 10B, l'aube 10 comprend un talon 14. Lorsque plusieurs aubes mobiles 10 sont fixées sur un disque de rotor, leurs talons 14 sont disposés bord à bord de manière à former une couronne circonférentielle.

Le talon 14 comprend: une plateforme 20 délimitant extérieurement la veine d'écoulement du gaz circulant entre les pales 16, et présentant des premier et deuxième bords latéraux 21, 22 opposés, respectivement du côté d'intrados et du côté d'extrados de l'aube 10 ; et des léchettes d'étanchéité amont 31 et aval 32 s'étendant radialement vers l'extérieur à partir de la face extérieure de la plateforme 20. Chacun des premier et deuxième bords latéraux de la plateforme présente, entre les léchettes amont 31 et aval 32, un profil sensiblement en "Z" avec une première portion 21A, 22A, proche de la léchette amont 31, une deuxième portion intermédiaire 21B, 22B, et une troisième portion 21C, 22C, proche de la léchette aval 32, les première et troisième portions étant sensiblement parallèles entre elles et la deuxième portion s'étendant obliquement entre les première et troisième portions.

Dans le but d'amortir les vibrations auxquelles les aubes 10 sont soumises en fonctionnement, les aubes sont montées sur leur disque de rotor avec une contrainte de torsion autour de leur axe d'empilement X : la géométrie des talons 14 étant telle que chaque aube 10 est mise en contrainte de torsion par appui sur les aubes voisines le long des deuxièmes portions 21B, 22B des bords latéraux 21, 22. Les deuxièmes portions 21B, 22B définissent donc les surfaces de contact inter-aubes et sont le lieu de frottements importants lors du fonctionnement de la turbomachine.

Pour être protégées contre l'usure, les deuxièmes portions 21B, 22B sont recouvertes d'un matériau résistant aux frottements, commercialisé sous la marque "Stellite". Classiquement, ce matériau anti-usure est déposé sur les deuxièmes portions 21B, 22B par soudure. Il s'agit d'une opération manuelle, le matériau anti-usure étant sous forme liquide lors du dépôt.

Un premier problème rencontré avec de telles aubes 10 tient au fait que, lorsque les deuxièmes portions 21B, 22B du talon 14 sont étroites (i.e. présentent une hauteur limitée suivant l'axe d'empilement X), il est difficile de déposer le matériau anti-usure uniquement sur ces portions 21B, 22B (i.e. de ne pas déborder de ces portions), le procédé de dépôt utilisé n'étant pas suffisamment précis. Or, le dépôt de matériau anti-usure au-delà des portions 21B, 22B, en particulier sur le congé situé entre la pale 16 et la face interne de la plateforme 20, est néfaste car il peut générer des criques dans la pièce et des pertes aérodynamiques dans la veine de gaz.

Une solution à ce premier problème consiste à "surdimensionner" les deuxièmes portions 21B, 22B, c'est-à-dire à augmenter leur hauteur suivant l'axe d'empilement X. Toutefois, cette solution n'est pas satisfaisante car elle augmente la masse et l'encombrement du talon 14.

Un autre problème rencontré avec de telles aubes 10 est le chevauchement des aubes adjacentes (i.e. le bord latéral 21 d'une première aube passe au-dessus du bord latéral 22 d'une deuxième aube, adjacente à la première) lors des différentes phases de fonctionnement de la turbomachine.

Il existe donc un besoin pour un autre type d'aube mobile.

### PRESENTATION DE L'INVENTION

Le présent exposé a pour objet une aube mobile de turbomachine, selon la revendication 1, présentant à son extrémité distale un talon, ce talon comprenant une plateforme délimitant la surface extérieure de la veine de gaz traversant la turbomachine et la plateforme présentant des premier et deuxième bords latéraux opposés. Le talon comprend également des léchettes d'étanchéité amont et aval s'étendant (en hauteur) à partir de ladite plateforme vers l'extérieur, chaque léchette s'étendant (en longueur) entre deux faces latérales situées respectivement au niveau des premier et deuxième bords latéraux. Cette aube est telle que les faces latérales de la léchette amont ou aval sont recouvertes au moins en partie d'un matériau anti-usure.

Selon cette solution, les faces latérales de la léchette amont ou aval sont configurées pour porter le matériau anti-usure et servir ainsi de surfaces de contact inter-aubes.

Cette solution permet de respecter les critères fonctionnels et de fabrication du talon, tout en réduisant la masse et l'encombrement de celui-ci (or, en termes de masse, le talon est la zone la plus critique de l'aube). En particulier, il n'est plus nécessaire de surdimensionner les portions intermédiaires des bords latéraux puisque celles-ci ne servent plus de surface de contact inter-aubes. Les bords latéraux peuvent donc être prévus aussi étroits que nécessaire. Par ailleurs, les nouvelles surfaces de contact inter-aubes utilisent les léchettes sans qu'il soit nécessaire de surdimensionner celles-ci.

Cette solution a pour avantages supplémentaire de faciliter le positionnement du centre de gravité du talon de l'aube, ce qui améliore le comportement de l'aube en mécanique vibratoire et statique.

En outre, la solution proposée permet de définir une surface de contact inter-aubes assez grande, ce qui limite l'usure de cette surface.

Enfin, avec cette solution, le risque de chevauchement des aubes diminue du fait que la hauteur de la surface de contact inter-aubes est plus importante.

Le matériau anti-usure utilisé peut être un alliage de base cobalt et, notamment, un alliage du type de ceux commercialisés sous la marque "Stellite" qui comprennent une teneur en chrome significative.

Les faces latérales de la léchette amont ou aval sont recouvertes partiellement par le matériau anti-usure. Lorsqu'elles sont recouvertes entièrement, cas non revendiqué, la couche de matériau anti-usure s'étend en hauteur le long de la léchette, depuis la face intérieure de la plateforme (i.e. le matériau anti-usure couvre la partie du bord latéral située à la base de la léchette, dans le prolongement de celle-ci) jusqu'à l'extrémité extérieure (i.e. distale) de la léchette. La présence de matériau anti-usure au niveau de l'extrémité extérieure de la léchette présente l'avantage de renforcer celle-ci. Lorsqu'elles sont recouvertes partiellement, la couche de matériau anti-usure peut s'étendre en hauteur, par exemple, depuis la face intérieure de la plateforme jusqu'à une limite extérieure distante de l'extrémité extérieure de la léchette. Dans ce cas, la portion d'extrémité extérieure de la léchette peut être faite du même matériau que le reste du bord extérieur de la léchette. Cette solution peut s'avérer intéressante dans le cas où le matériau anti-usure ne présente pas les propriétés requises pour être en contact avec le matériau abradable (dit "abradable") présent sur le carter extérieur et qui entoure extérieurement la léchette. L'abradable est typiquement un matériau en forme de nid d'abeille, par exemple en métal. Le bord extérieur de la léchette pénètre dans l'abradable (qui est fixe) afin d'assurer une bonne étanchéité en fonctionnement.

Le matériau anti-usure peut également recouvrir les portions des bords latéraux qui jouxtent la base de la léchette.

Par ailleurs, l'utilisation de la léchette amont ou de la léchette aval pour définir les surfaces de contact inter-aubes permet d'optimiser la forme de la plateforme du talon en termes de masse et d'encombrement.

Dans certains modes de réalisation, dans un plan de coupe axial, les léchettes sont inclinées vers l'amont d'un angle non-nul par rapport à la direction radiale. Ceci permet de gagner en performance en évitant, en fonctionnement, les fuites d'air hors de la veine.

Dans d'autres modes de réalisation, les léchettes ne sont pas inclinées par rapport à la direction radiale, i.e. dans un plan de coupe axial, les léchettes forment un angle sensiblement nul par rapport à la direction radiale : elles s'étendent sensiblement suivant cette direction.

Ainsi, dans certains modes de réalisation d'un premier type, dans lequel les faces latérales de la léchette amont sont utilisées comme surfaces de contact inter-aubes et, à cet effet, sont recouvertes du matériau anti-usure, on peut retenir pour la plateforme la forme optimisée suivante: chacun des premier et deuxième bords latéraux présente, entre les léchettes amont et aval, un profil ayant une forme générale en "U" avec une première portion proche de la léchette amont et formant une première branche du "U", une deuxième portion intermédiaire formant la base du "U" et une troisième portion proche de la léchette aval et formant une deuxième branche du "U", les première et troisième portions étant divergentes.

Dans certains modes de réalisation du premier type, la deuxième portion précitée s'étend sensiblement perpendiculairement aux léchettes.

Dans certains modes de réalisation du premier type, la troisième portion est au moins deux fois plus grande que la première portion.

Dans certains modes de réalisation du premier type, la deuxième portion est plus petite que la première portion.

Dans certains modes de réalisation d'un deuxième type, dans lequel les faces latérales de la léchette amont sont utilisées comme surfaces de contact inter-aubes et, à cet effet, sont recouvertes du matériau anti-usure, on peut retenir pour la plateforme la forme optimisée suivante: chacun des premier et deuxième bords latéraux présente, entre les léchettes amont et aval, un profil avec une première portion proche de la léchette amont, une deuxième portion intermédiaire et une troisième portion proche de la léchette aval, les première et troisième portions étant sensiblement parallèles entre elles et la deuxième portion s'étendant obliquement entre les première et troisième portions, de l'amont vers l'aval et depuis le côté d'extrados vers le côté d'intrados de l'aube.

Ce type de profil à trois pans est parfois appelé profil en "Z"' bien que l'angle formé entre la première et la deuxième portion soit un angle obtus (et non aigus) et que l'angle formé entre la deuxième et la troisième portion soit également un angle obtus.

Grace à cette forme optimisée du talon, il est plus facile - lors de la fabrication de l'aube - de positionner correctement le centre de gravité du talon par rapport à celui de la pale en pied. Généralement, on cherche à aligner ces deux centres de gravité suivant la direction radiale. Mieux positionner le centre de gravité du talon par rapport à celui de la pale en pied permet d'obtenir un meilleur comportement mécanique de l'aube en fonctionnement et, notamment, d'améliorer la résistance mécanique de l'aube en fatique mégacyclique et en fluage rupture.

Une telle forme optimisée présente un intérêt particulier lorsque les léchettes sont inclinées vers l'amont. En effet, l'inclinaison des léchettes pose certaines difficultés pour aligner le centre de gravité du talon avec celui de la pale en pied.

Dans certains modes de réalisation du deuxième type, chacun des premier et deuxième bords latéraux présente une portion d'extrémité amont dans l'alignement de la première portion et une portion d'extrémité aval dans l'alignement de la troisième portion.

Ces portions d'extrémité amont et aval des bords latéraux délimitent latéralement les parties d'extrémité amont et aval (souvent appelée "becquet" amont et aval) de la plateforme, respectivement.

Ainsi, chaque bord latéral de la plateforme présente un profil à trois pans qui s'étend depuis le bord amont jusqu'au bord aval de la plateforme, Le profil de chaque bord latéral présentent donc trois pans en tout et pour tout. Du point de vue de la fabrication, un tel profil à trois pans est facile à usiner, notamment parce que le nombre de faces à usiner (seulement trois) est limité. Cette conception permet également de limiter la masse de la pièce brute, avant usinage, et donc le coût de fonderie. Cette conception limite enfin la formation de pointes et d'arêtes vives tranchantes qui posent problème lors de la manipulation des aubes.

Dans certains modes de réalisation du deuxième type, les première et troisième portions s'étendent sensiblement perpendiculairement aux léchettes.

Dans certains modes de réalisation du deuxième type, la léchette amont est inclinée vers l'amont d'un angle non-nul par rapport à la direction radiale, chacune des faces latérales de la léchette amont rejoignant le bord latéral de la plateforme au niveau de la portion intermédiaire de celui-ci. En outre, le matériau anti-usure recouvre chacune des faces latérales de la léchette amont, au moins partiellement, et recouvre au moins partiellement la portion intermédiaire de chaque bord latéral, de sorte que le matériau anti-usure situé du côté d'extrados de l'aube est exposé vers l'aval tandis que le matériau anti-usure situé du côté d'intrados de l'aube est exposé vers l'amont.

On notera que le sens d'exposition du matériau anti-usure est inversé par rapport aux solutions courantes. Par conséquent, l'angle de pré-torsion de l'aube est également inversé par rapport aux solutions conventionnelles.

Le présent exposé a également pour objet une turbomachine comprenant une aube, selon la revendication 12.

### BREVE DESCRIPTION DES DESSINS

Les dessins annexés sont schématiques et ne sont pas nécessairement à l'échelle, ils visent avant tout à illustrer les principes de l'invention.

Sur ces dessins, d'une figure (ci-après "FIG") à l'autre, des éléments (ou parties d'élément) identiques sont repérés par les mêmes signes de référence.
La FIG 1 représente, en perspective, un exemple d'aube mobile selon l'art antérieur.
La FIG 2 représente, en perspective, un exemple d'aube mobile selon le présent exposé, non revendiqué.
La FIG 3 est une vue de détail, de dessus, du talon de l'aube de la FIG 2.
La FIG 4 est une vue de détail, de côté, du talon de l'aube de la FIG 2.
La FIG 5 est une vue analogue à celle de la FIG. 4, représentant un autre exemple d'aube mobile selon le présent exposé.
La FIG 6 représente, en perspective, un autre exemple d'aube mobile selon le présent exposé, seule la partie extérieure de cette aube étant représentée.
La FIG 7 est une vue de détail, de dessus, du talon de l'aube de la FIG 6.
La FIG 8 est une vue de détail, de côté, du talon de l'aube de la FIG 6.
La FIG 9 est une vue analogue à celle de la FIG. 6, représentant un autre exemple d'aube mobile selon le présent exposé, non revendiqué.

### DESCRIPTION DETAILLEE D'EXEMPLES DE REALISATION

Des exemples de réalisation d'une aube mobile à talon sont décrits en détail ci-après, en référence aux dessins annexés. Ces exemples illustrent les caractéristiques et les avantages de l'invention. Il est toutefois rappelé que l'invention ne se limite pas à ces exemples.

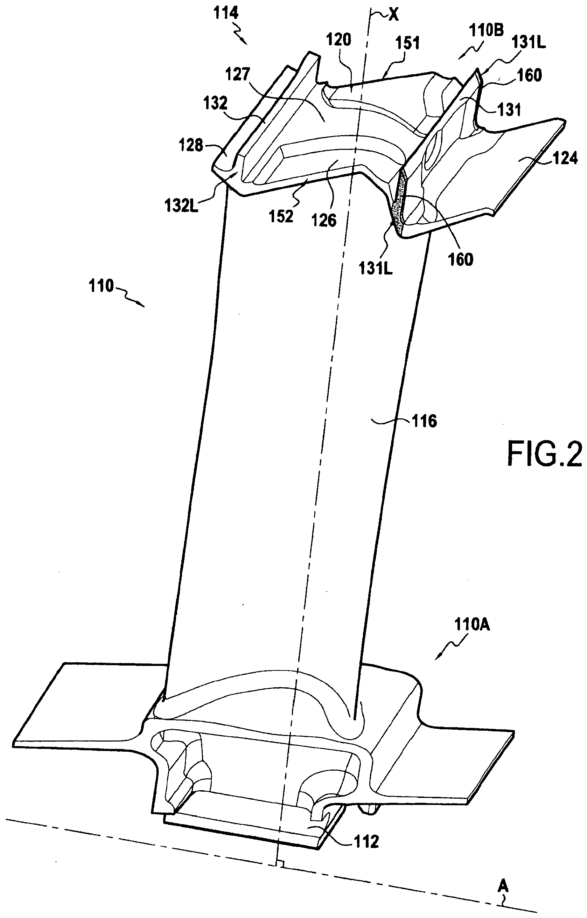

La FIG 2 représente un exemple d'aube mobile 110 de turbomachine. Une telle aube peut être utilisée dans un étage basse pression d'un turboréacteur d'avion.

L'aube mobile 110 comprend une pale 116 s'étendant suivant l'axe d'empilement X de l'aube, entre les extrémités proximale 110A et distale 110B (i.e. intérieure et extérieure) de l'aube. A son extrémité proximale 110A, l'aube comprend un pied 112 par lequel elle est fixée à un disque du rotor (non représenté) d'une turbomachine (non représentée). Ce disque tourne autour de l'axe A de la turbomachine. A son extrémité distale 110B, l'aube 110 comprend un talon 114.

Lorsque plusieurs aubes mobiles 110 sont fixées sur un disque de rotor, leurs talons 114 sont disposés bord à bord de manière à former une couronne circonférentielle rotative délimitant une surface de révolution autour de l'axe A de rotation du disque. Cette couronne a, notamment, pour fonction de délimiter la surface extérieure de la veine d'écoulement du gaz circulant entre les pales 116 et de limiter ainsi les fuites de gaz au niveau de l'extrémité distale 110B des aubes 110.

Le talon 114 comprend une plateforme 120 délimitant extérieurement la veine d'écoulement du gaz circulant entre les pales 116, et présentant des premier et deuxième bords latéraux 151, 152 opposés. Le talon 114 comprend également des léchettes d'étanchéité amont 131 et aval 132 s'étendant radialement vers l'extérieur à partir de la plateforme 120. Chaque léchette 131 (132) présente deux faces latérales 131L (132L) situées respectivement au niveau des premier et deuxième bords latéraux (151, 152), et chaque léchette 131 (132) s'étend circonférentiellement entre ses deux faces latérales 131L (132L).

Lorsque plusieurs aubes mobiles 110 sont fixées sur un disque de rotor, les léchettes amont 131 ou aval 132 des aubes sont disposées bord à bord de manière à former un anneau rotatif d'axe A, cet anneau étant contenu sensiblement dans un plan radial. Un tel anneau a notamment pour fonction de limiter le jeu existant entre les aubes 110 et l'enveloppe, ou carter, qui entoure celles-ci, afin de limiter les fuites de gaz à cet endroit.

La configuration de la plateforme 120 est optimisée en termes de masse et d'encombrement.

La plateforme 120 présente une partie amont 124, communément appelée "becquet amont", s'étendant en amont de la léchette amont 31. La plateforme 120 présente également une partie aval 128, communément appelée "becquet aval", s'étendant en aval de la léchette aval 132. Enfin, la plateforme présente une partie centrale 126 s'étendant entre les léchettes amont 131 et aval 132. Dans l'exemple, cette partie centrale 126 comprend une nervure 127, en forme de virgule, qui s'étend depuis la léchette amont 131 jusqu'à la léchette aval 132 et qui est une résultante du procédé de fonderie par lequel l'aube est fabriquée.

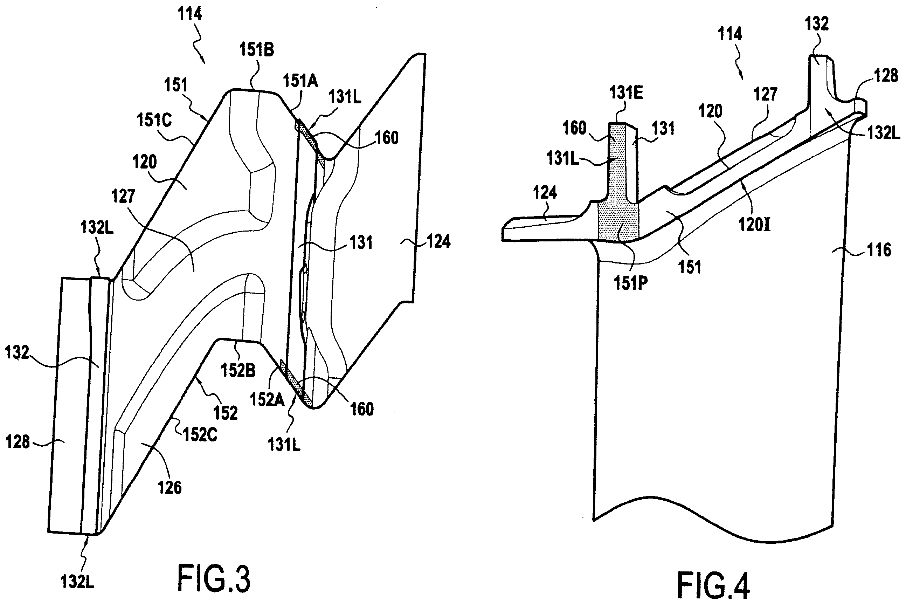

Comme le montre bien la FIG 3, dans la partie centrale 126, chacun des premier et deuxième bords latéraux 151 (152) de la plateforme 120 présente, un profil ayant une forme générale en "U" avec une première portion 151A (152A) proche de la léchette amont 131 et formant une première branche du "U", une deuxième portion 151B (152B) intermédiaire formant la base du "U" et une troisième portion 151C (152C) proche de la léchette aval 132 et formant une deuxième branche du "U", les première et troisième portions 151A, 151C (152A, 152C) étant divergentes, i.e. ces portions 151A, 151C (152A, 152C) s'écartent l'une de l'autre à mesure que l'on s'éloigne de la deuxième portion 151B (152B). Dans l'exemple, la deuxième portion 151B (152B) s'étend sensiblement perpendiculairement aux léchettes 131 (132). On notera toutefois que la deuxième portion 151B (152B) pourrait être inclinée différemment ou qu'elle pourrait même être absente. Dans ce dernier cas, les première et troisième portions 151A, 151C (152A, 152C) se rejoindraient et formeraient un "V".

Les premier et deuxième bords latéraux 151 et 152 présentent des formes complémentaires, le bord latéral 151 d'une première aube 110 devant s'emboîter dans le bord latéral 152 de l'aube adjacente à cette première aube 110. Ainsi, les premières portions 151A, 152A des bords latéraux 151 et 152 sont sensiblement parallèles entre elles. Il en va de même pour les deuxièmes portions 151B, 152B, et les troisièmes portions 151C, 152C. Par ailleurs, les profils en "U" des bords latéraux 151, 152, sont tels que les branches du "U" pointent vers l'intrados de l'aube 110.

La troisième portion 151C (152C) des bords latéraux 151 (152) peut être au moins deux fois plus grande que la première portion 151A (152A). Dans l'exemple, cette troisième portion 151C (152C) mesure environ le triple de la première portion 151A (152A). Par ailleurs, la deuxième portion 151B (152B) peut être plus petite que la première portion 151A (152A). Dans l'exemple, cette deuxième portion 151B (152B) est environ deux fois plus petite que la première portion 151A (152A). Par ailleurs, les première et troisième portions 151A, 151C (152A, 152C) peuvent former entre elles un angle compris, par exemple, entre 15 et 150° Dans l'exemple représenté, cet angle est d'environ 65°.

Dans le but d'amortir les vibrations auxquelles les aubes 110 sont soumises en fonctionnement, les aubes 110 sont montées sur leur disque de rotor (non représenté) avec une contrainte de torsion autour de leur axe d'empilement X. Ainsi, les talons 114 sont configurés pour que chaque aube 110 soit mise en contrainte de torsion par appui avec ses voisines, principalement le long des faces latérales 131L de la léchette amont 131.

La léchette amont 131 porte sur ses faces latérales 131L une couche de matériau anti-usure 160 obtenue par chargement de cette face latérale 131L avec un alliage de base cobalt présentant de bonnes propriétés anti-usure, comme, par exemple, un alliage du type de ceux commercialisés sous la marque "Stellite". Ce matériau anti-usure 160 est représenté grisé sur les figures.

Comme le montre bien sur la FIG 4, la couche de matériau anti-usure 160 s'étend radialement le long de la léchette 131, depuis la face intérieure 120I de la plateforme 120 jusqu'à l'extrémité extérieure 131E de la léchette. Chaque face latérale 131L de la léchette amont 131 est donc recouverte de bas en haut par le matériau anti-usure 160 et le matériau anti-usure 160 recouvre également une portion 151P du bord latéral 151 qui jouxte la base de la léchette. Cette portion 151P comprend la portion de bord située radialement dans le prolongement de la léchette et peut également comprendre les portions de bord adjacentes à cette dernière, comme dans l'exemple représenté.

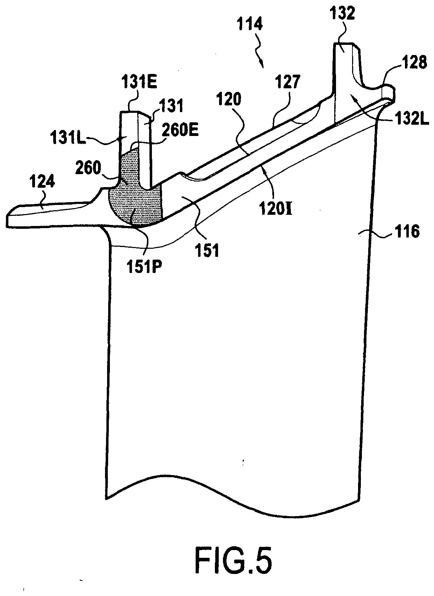

Selon un autre exemple de réalisation, représenté sur la FIG 5, chaque face latérale 131L de la léchette amont 131, ou une de ces faces latérales 131L (l'autre face 131L étant alors recouverte de bas en haut comme dans l'exemple des FIGS 2-4), est recouverte partiellement par un matériau anti-usure 260. Plus précisément, seule la portion intérieure de la face latérale 131L est recouverte. La couche de matériau anti-usure 260 s'étend radialement le long de la léchette 131, depuis la face intérieure 120I de la plateforme 120 jusqu'à une limite extérieure 260E distante de l'extrémité extérieure 131E de la léchette. Par exemple, la limite extérieure 260E est distante de 2 à 3 mm de l'extrémité extérieure 131E de la léchette. La portion extérieure de la face latérale 131L n'est donc pas recouverte de matériau anti-usure et, ainsi, le bord extérieur de la léchette peut être fait entièrement en un même matériau (i.e. le matériau de l'aube). Le matériau anti-usure 260 recouvre également une portion 151P du bord latéral 151 qui jouxte la base de la léchette. En comparaison avec l'exemple des FIGS 2-4, cette portion 151P est plus étendue vers l'aval, en direction de la léchette aval 132.

Dans l'exemple de la FIG 5, la face 131L qui porte la couche de matériau 260 peut être élargie localement (i.e. son épaisseur axiale peut être augmentée), par rapport au reste de la léchette 131, afin de maximiser la surface de contact inter-aubes.

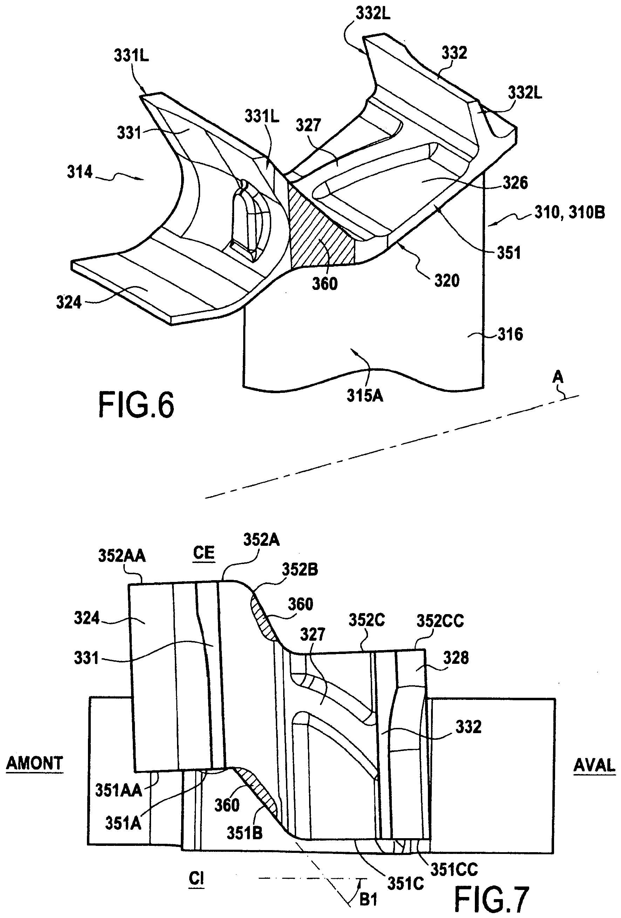

La FIG 6 représente un exemple d'aube mobile 310 de turbomachine. Une telle aube peut être utilisée dans un étage basse pression d'un turboréacteur d'avion.

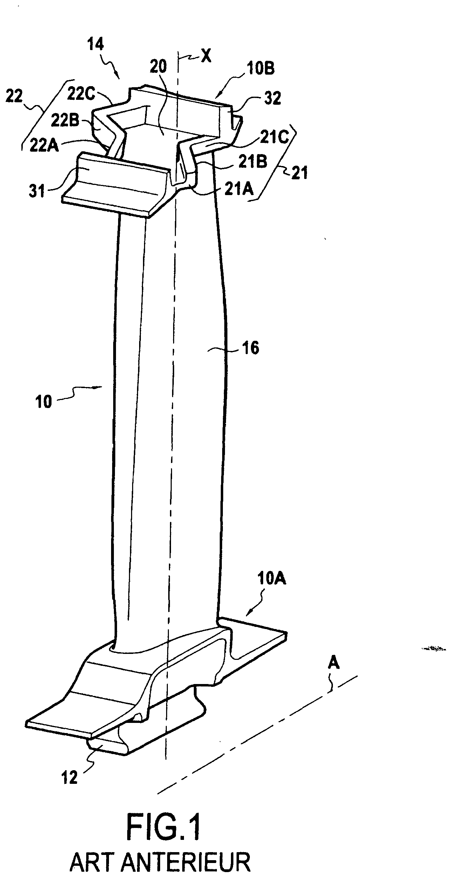

Seule la partie extérieure (distale) 310B de l'aube 310 est représentée sur la FIG 6. La partie intérieure (proximale) de l'aube 310 peut être analogue à celle de l'aube de la FIG 1.

L'aube mobile 310 comprend une pale 316 s'étendant suivant l'axe d'empilement de l'aube, entre les extrémités proximale (i.e. intérieure) et distale (i.e. extérieure) 310B de l'aube. La pale 316 présente une face d'intrados 315A et une face d'extrados (non-visible sur la FIG 6). A son extrémité proximale (non représentée), l'aube 310 comprend un pied par lequel elle est fixée à un disque du rotor (non représenté) d'une turbomachine (non représentée). Ce disque tourne autour de l'axe A de la turbomachine. A son extrémité distale 310B, l'aube 310 comprend un talon 314.

Lorsque plusieurs aubes mobiles 310 sont fixées sur un disque de rotor, leurs talons 314 sont disposés bord à bord de manière à former une couronne circonférentielle rotative délimitant une surface de révolution autour de l'axe A de rotation du disque. Cette couronne a, notamment, pour fonction de délimiter la surface extérieure de la veine d'écoulement du gaz circulant entre les pales 316 et de limiter ainsi les fuites de gaz au niveau de l'extrémité distale 310B des aubes 310.

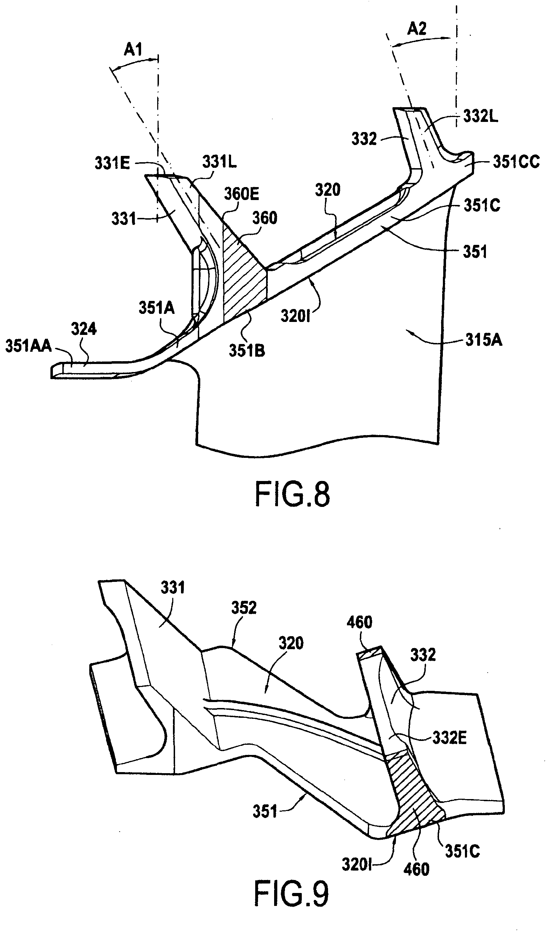

Le talon 314 comprend une plateforme 320 délimitant extérieurement la veine d'écoulement du gaz circulant entre les pales 316, et présentant des premier et deuxième bords latéraux 351, 352 opposés situés, respectivement, du côté d'intrados et du côté d'extrados de l'aube 310. Le talon 314 comprend également des léchettes d'étanchéité amont 331 et aval 332 s'étendant en hauteur à partir de la plateforme 320 vers l'extérieur. Dans l'exemple, ces léchettes 331, 332 sont respectivement inclinées par rapport à la direction radiale, vers l'amont, d'un angle A1 et A2 non-nuls. Les angles A1 et A2 sont repérés sur la FIG. 8, ces angles étant mesurés respectivement dans des plans de coupe axiaux passant par les faces latérales 331L et 332L des léchettes 331, 332.

Chaque léchette 331 (332) présente deux faces latérales 331L (332L) situées respectivement au niveau des premier et deuxième bords latéraux (351, 352). Une des faces latérales 331L (332L) de la léchette 331 (332) est donc située du côté d'intrados de l'aube 310 et l'autre face est située du côté d'extrados. Chaque léchette 331 (332) s'étend ainsi en longueur, du côté d'intrados vers le côté d'extrados (i.e. suivant une direction circonférentielle), entre ses deux faces latérales 331L (332L).

Lorsque plusieurs aubes mobiles 310 sont fixées sur un disque de rotor, les léchettes amont 331 ou aval 332 des aubes sont disposées bord à bord de manière à former un anneau rotatif d'axe A, cet anneau étant contenu sensiblement dans un plan radial. Un tel anneau a notamment pour fonction de limiter le jeu existant entre les aubes 310 et l'enveloppe, ou carter, qui entoure celles-ci, afin de limiter les fuites de gaz à cet endroit.

La configuration de la plateforme 320 est optimisée en termes de masse et d'encombrement.

La plateforme 320 présente une partie d'extrémité amont 324, communément appelée "becquet amont", s'étendant en amont de la léchette amont 331. La plateforme 320 présente également une partie d'extrémité aval 328, communément appelée "becquet aval", s'étendant en aval de la léchette aval 332. Enfin, la plateforme présente une partie centrale 326 s'étendant entre les léchettes amont 331 et aval 332. Dans l'exemple, cette partie centrale 326 comprend une nervure 327, en forme de virgule, qui s'étend depuis la léchette amont 331 jusqu'à la léchette aval 332 et qui est une résultante du procédé de fonderie par lequel l'aube 310 est fabriquée.

Comme le montre bien la FIG 7, dans la partie centrale 326, chacun des premier et deuxième bords latéraux 351 (352) de la plateforme 320 présente, un profil à trois pans avec une première portion 351A (352A) proche de la léchette amont 331, une deuxième portion 351B (352B) intermédiaire et une troisième portion 351C (352C) proche de la léchette aval 332. La deuxième portion 351B (352B) s'étend obliquement entre les première et troisième portions, de l'amont vers l'aval et depuis le côté d'extrados CE vers le côté d'intrados CI de l'aube (voir FIG 7). Ainsi, en vue de dessus, dans la plan de la partie centrale 326 de la plateforme 320 l'angle orienté B1 (voir FIG 7) entre la deuxième portion 351B (352B) et la direction axiale (i.e. la direction amont-aval), est strictement compris entre 0 et +90° et, de préférence, supérieur à +50°.

Dans l'exemple, les première et troisième portions 351A, 351C (352A, 352C) sont sensiblement parallèles entre elles et orientées suivant la direction axiale. Elles sont sensiblement perpendiculaires, respectivement, aux léchettes 331 et 332.

En outre, les premier et deuxième bords latéraux 351, 352 présentent chacun une portion d'extrémité amont 351AA, 352AA dans l'alignement de la première portion 351A, 352A et une portion d'extrémité aval 351CC, 352CC dans l'alignement de la troisième portion 351C, 352C. Les portions d'extrémité amont 351AA des bords 351, 352 délimitent latéralement le becquet amont 324, tandis que les portions d'extrémité aval 351CC, 352CC des bords 351, 352 délimitent latéralement le becquet aval 328.

Les premier et deuxième bords latéraux 351 et 352 présentent des formes complémentaires, le bord latéral 351 d'une première aube 310 devant s'emboîter dans le bord latéral 352 de l'aube adjacente à cette première aube 310. Ainsi, les premières portions 351A, 352A des bords latéraux 351 et 352 sont sensiblement parallèles entre elles. Il en va de même pour les deuxièmes portions 351B, 352B, et les troisièmes portions 351C, 352C.

Dans le but d'amortir les vibrations auxquelles les aubes 310 sont soumises en fonctionnement, les aubes 310 sont montées sur leur disque de rotor (non représenté) avec une contrainte de torsion autour de leur axe d'empilement. Les talons 314 sont configurés pour que chaque aube 310 soit mise en contrainte de torsion par appui avec ses voisines, principalement le long des faces latérales 331L de la léchette amont 331.

Aussi, la léchette amont 331 porte sur ses faces latérales 331L une couche de matériau anti-usure 360 obtenue par chargement de cette face latérale 331L avec un alliage de base cobalt présentant de bonnes propriétés anti-usure, comme, par exemple, un alliage du type de ceux commercialisés sous la marque "Stellite". Ce matériau anti-usure 360 est représenté grisé sur les figures.

Dans l'exemple, la léchette amont 331 s'élargit (i.e. son épaisseur axiale augmente) à mesure qu'elle se rapproche de la plateforme 320, de sorte que la face latérale 331L de la léchette s'évase à mesure qu'elle rejoint le bord latéral 351 de la plateforme 320, comme représenté sur la FIG 8. La face latérale 331L rejoint le bord latéral 351 de la plateforme au niveau de la portion intermédiaire 351B de celui-ci (voir FIGS 6-8).

Comme le montre la FIG 8, la couche de matériau anti-usure 360 s'étend en hauteur le long de la léchette 331, depuis la face intérieure 320I de la plateforme 320 jusqu'à une limite extérieure 360E. Dans l'exemple, cette limite extérieure 360E est distante de l'extrémité extérieure 331E de la léchette. Le matériau anti-usure ne recouvre donc qu'une zone intérieure de la face latérale 331L. Le matériau anti-usure 360 recouvre également une zone de la portion intermédiaire 351B du bord latéral 351, cette zone jouxtant la base de la léchette 331.

Dans l'exemple, la couche de matériau anti-usure 360 s'étend depuis la base de la léchette 331 vers la limite extérieure 360E, suivant une direction sensiblement radiale, alors que la léchette 331 est inclinée par rapport à la direction radiale. Aussi, le matériau anti-usure 360 ne recouvre qu'une partie de la face latérale 331L.

Comme le montre la FIG 7, le matériau anti-usure 360 situé du côté d'extrados CE de l'aube est exposé vers l'aval tandis que le matériau anti-usure 360 situé du côté d'intrados CI de l'aube est exposé vers l'amont. Le sens d'exposition du matériau anti-usure est donc inversé par rapport aux solutions conventionnelles.

Un autre exemple de réalisation est représenté sur la FIG 9, cet exemple diffère essentiellement de celui des FIGS 6-8 par le positionnement du matériau anti-usure 460, la forme générale de la plateforme 320, des léchettes 331, 332 et des bords latéraux 351, 352 étant analogue dans les deux exemples.

Dans l'exemple de la FIG 9 la couche de matériau anti-usure 460 s'étend le long de la léchette aval 332. En outre, le matériau anti-usure 460 s'étend depuis la face intérieure 320I de la plateforme 320 jusqu'à l'extrémité extérieure 332E de la léchette. Chaque face latérale 332L de la léchette aval 332 est donc recouverte entièrement de matériau anti-usure 460. Le matériau anti-usure 460 recouvre également la zone de la troisième portion 351C (352C) du bord latéral 351 (352), qui jouxte la base de la léchette 332.

D'une manière générale, le matériau anti-usure peut être déposé de différentes manières. Par exemple, le matériau anti-usure peut être sous forme de plaquettes (réalisées en un alliage spécifique présentant une dureté élevée) que l'on vient braser sur les faces latérales des léchettes. Selon une autre technique, on procède par chargement progressif de la surface à protéger avec un matériau anti-usure que l'on met en fusion en même temps que la couche supérieure du substrat. La chaleur nécessaire au dépôt est apportée au moyen d'une source appropriée comme, par exemple, un arc électrique gainé de gaz neutre ou bien un faisceau laser.

Par ailleurs, selon certaines méthodes, le matériau anti-usure est déposé sur le substrat (i.e. le corps de l'aube) après avoir enlevé localement par meulage, sur une profondeur déterminée, la matière de ce substrat. Selon d'autres méthodes, lors de la fabrication du talon (par exemple par fonderie), les zones du substrat destinées à être recouvertes par le matériau anti-usure sont "sous-dimensionnées" par rapport à la forme finale souhaitée. On dépose ensuite sur ces zones le matériau anti-usure et on rectifie par usinage les zones recouvertes pour obtenir la forme finale souhaitée.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf incompatibilité technique majeure, une caractéristique décrite en relation avec un mode ou exemple de réalisation peut être appliquée de manière analogue à un autre mode ou exemple de réalisation.

## Revendications

1. Aube mobile de turbomachine présentant à son extrémité distale (110B, 310B) un talon (114, 314), ce talon comprenant:
une plateforme (120, 320) délimitant la surface extérieure de la veine de gaz traversant la turbomachine, et présentant des premier et deuxième bords latéraux (151, 152, 351, 352) opposés, et
des léchettes d'étanchéité amont et.aval (131, 132, 331, 332) s'étendant à partir de ladite plateforme (120, 320) vers l'extérieur, chaque léchette s'étendant entre deux faces latérales (131L, 132L, 331L, 332L) situées respectivement au niveau des premier et deuxième bords latéraux (151, 152, 351, 352),
cette aube (110, 310) étant **caractérisée en ce que**:
les faces latérales (131L, 132L, 331L, 332L) de la léchette amont ou aval (131, 132, 331, 332) sont recouvertes partiellement d'un matériau anti-usure (260, 360), seule une zone intérieure de ces faces latérales (131L, 132L, 331L, 332L) étant recouverte.

2. Aube selon la revendication 1, dans laquelle chacun des premier et deuxième bords latéraux (351, 352) présente, entre les léchettes amont et aval (331, 332), un profil avec une première portion (351A; 352A) proche de la léchette amont (331), une deuxième portion (351B; 352B) intermédiaire et une troisième portion (351C; 352C) proche de la léchette aval (332), les première et troisième portions (351A, 351C; 352A, 352C) étant sensiblement parallèles entre elles et la deuxième portion (351B; 352B) s'étendant obliquement entre les première et troisième portions, de l'amont vers l'aval et depuis le côté d'extrados vers le côté d'intrados de l'aube.

3. Aube selon la revendication 2, dans laquelle chacun des premier et deuxième bords latéraux (351, 352) présente une portion d'extrémité amont (351AA; 352AA) dans l'alignement de la première portion (351A; 352A) et une portion d'extrémité aval (351CC; 352CC) dans l'alignement de la troisième portion (351C; 352C).

4. Aube selon la revendication 2 ou 3, dans laquelle les première et troisième portions (351A, 351C; 352A, 352C) s'étendent sensiblement perpendiculairement aux léchettes (331, 332).

5. Aube selon l'une quelconque des revendications 2 à 4, dans laquelle la léchette amont (331) est inclinée vers l'amont d'un angle (A1) non-nul par rapport à la direction radiale, chacune des faces latérales (331L) de la léchette amont rejoignant le bord latéral (351, 352) de la plateforme au niveau de la portion intermédiaire (351B, 352B) de celui-ci, et dans laquelle le matériau anti-usure (360) recouvre chacune des faces latérales (331L) de la léchette amont, au moins partiellement, et recouvre au moins partiellement la portion intermédiaire (351B, 352B) de chaque bord latéral, de sorte que le matériau anti-usure (360) situé du côté d'extrados (CE) de l'aube est exposé vers l'aval tandis que le matériau anti-usure situé du côté d'intrados (CI) de l'aube est exposé vers l'amont.

6. Aube selon la revendication 1, dans laquelle chacun des premier et deuxième bords latéraux (151, 152) présente, entre les léchettes amont et aval (131, 132), un profil ayant une forme générale en "U" avec une première portion (151A; 152A) proche de la léchette amont (131) et formant une première branche du "U", une deuxième portion (151B; 152B) intermédiaire formant la base du "U" et une troisième portion (151C; 152C) proche de la léchette aval (132) et formant une deuxième branche du "U", les première et troisième portions (151A, 151C; 152A, 152C) étant divergentes.

7. Aube selon la revendication 6, dans laquelle la deuxième portion (151B; 152B) s'étend sensiblement perpendiculairement aux léchettes (131, 132).

8. Aube selon la revendication 6 ou 7, dans laquelle la troisième portion (151C; 152C) est au moins deux fois plus grande que la première portion (151A, 152A).

9. Aube selon l'une quelconque des revendications 1 à 8, dans laquelle les faces latérales (131L, 331L) de la léchette amont (131, 331) sont recouvertes du matériau anti-usure (260, 360).

10. Aube selon l'une quelconque des revendications 1 à 9, dans laquelle, dans un plan de coupe axial, la léchette amont (131, 331) et/ou aval (132, 332) est inclinée vers l'amont d'un angle (A1, A2) non-nul par rapport à la direction radiale.

11. Aube selon l'une quelconque des revendications 1 à 9, la léchette amont (131, 331) et/ou aval (132, 332) s'étend sensiblement suivant la direction radiale.

12. Turbomachine comprenant une aube (110, 310) selon l'une quelconque des revendications précédentes.

## Patentansprüche

1. Bewegliche Schaufel einer Strömungsmaschine, die an ihrem distalen Ende (110B, 310B) einen Fuß (114, 314) aufweist, wobei dieser Fuß umfasst:
eine Plattform (120, 320), die die Außenfläche der Gasleitung, die durch die Strömungsmaschine hindurchgeht, begrenzt, und erste und zweite gegenüberliegende Seitenränder (151, 152, 351, 352) aufweist, und stromaufwärtige und stromabwärtige Dichtungslippen (131, 132, 331, 332), die sich von der Plattform (120, 320) nach außen erstrecken, wobei sich jede Dichtungslippe zwischen zwei Seitenflächen (131L, 132L, 331L, 332L) erstreckt, die im Bereich der ersten bzw. zweiten Seitenränder (151, 152, 351, 352) angeordnet sind,
wobei diese Schaufel (110, 310) **dadurch gekennzeichnet ist, dass**:
die Seitenflächen (131L, 132L, 331L, 332L) der stromaufwärtigen oder stromabwärtigen Dichtungslippe (131, 132, 331, 332) teilweise mit einem Anti-Verschleißmaterial (260, 360) bedeckt sind, wobei nur eine Innenzone dieser Seitenfläche (131L, 132L, 331L, 332L) bedeckt ist.

2. Schaufel nach Anspruch 1, bei der jeder der ersten und zweiten Seitenränder (351, 352) zwischen den stromaufwärtigen und stromabwärtigen Dichtungslippen (331, 332) ein Profil mit einem ersten Abschnitt (351A; 352A) nahe der stromaufwärtigen Dichtungslippe (331), einen zweiten Zwischenabschnitt (351B; 352B) und einen dritten Abschnitt (351C; 352C) nahe der stromabwärtigen Dichtungslippe (332) aufweist, wobei die ersten und dritten Abschnitte (351A, 351C; 352A, 352C) im Wesentlichen zueinander parallel sind, und sich der zweite Abschnitt (351B; 352B) schräg zwischen den ersten und dritten Abschnitten von stromaufwärts nach stromabwärts und von der Außenseite zur Unterseite der Schaufel erstreckt.

3. Schaufel nach Anspruch 2, bei der jeder der ersten und zweiten Seitenränder (351, 352) einen stromaufwärtigen Endabschnitt (351AA; 352AA) in der Ausrichtung des ersten Abschnitts (351A; 352A) und einen stromabwärtigen Endabschnitt (351CC; 352CC) in der Ausrichtung des dritten Abschnitts (351C; 352C) aufweist.

4. Schaufel nach Anspruch 2 oder 3, bei der sich die ersten und dritten Abschnitt (351A; 351C; 352A, 352C) im Wesentlichen senkrecht auf die Dichtungslippen (331, 332) erstrecken.

5. Schaufel nach einem der Ansprüche 2 bis 4, bei der die stromaufwärtige Dichtungslippe (331) stromaufwärts um einen Winkel (A1) ungleich Null in Bezug zur Radialrichtung geneigt ist, wobei jede der Seitenflächen (331L) der stromaufwärtigen Dichtungslippe an den Seitenrand (351, 352) der Plattform im Bereich des Zwischenabschnitts (351B, 352B) desselben anschließt, und bei der das Anti-Verschleißmaterial (360) jede der Seitenflächen (331L) der stromaufwärtigen Dichtungslippe zumindest teilweise bedeckt und zumindest teilweise den Zwischenabschnitt (351B, 352B) jedes Seitenrandes bedeckt, so dass das Anti-Verschleißmaterial (360), das sich auf der Außenseite (CE) der Schaufel befindet, in die stromabwärtige Richtung exponiert ist, während das Anti-Verschleißmaterial, das sich auf der Unterseite (CI) der Schaufel befindet, in die stromaufwärtige Richtung exponiert ist.

6. Schaufel nach Anspruch 1, bei der jeder der ersten und zweiten Seitenränder (151, 152) zwischen den stromaufwärtigen und stromabwärtigen Dichtungslippen (131, 132) ein Profil mit einer allgemeinen "U-Form" mit einem ersten Abschnitt (151A; 152A) nach der stromaufwärtigen Dichtungslippe (131), der einen ersten Schenkel des "U" bildet, einem zweiten Zwischenabschnitt (151B; 152B), der die Basis des "U" bildet, und einem dritten Abschnitt (151C; 152C) nach der stromabwärtigen Dichtungslippe (132), der einen zweiten Schenkel des "U" bildet, aufweist, wobei die ersten und dritten Abschnitte (151A, 151C; 152A, 152C) divergierend sind.

7. Schaufel nach Anspruch 6, bei der sich der zweite Abschnitt (151B; 152B) im Wesentlichen senkrecht auf die Dichtungslippen (131, 132) erstreckt.

8. Schaufel nach Anspruch 6 oder 7, bei der der dritte Abschnitt (151C; 152C) mindestens zweimal größer als der erste Abschnitt (151A, 152A) ist.

9. Schaufel nach einem der Ansprüche 1 bis 8, bei der die Seitenflächen (131L, 331L) der stromaufwärtigen Dichtungslippe (131, 331) mit dem Anti-Verschleißmaterial (260, 360) bedeckt sind.

10. Schaufel nach einem der Ansprüche 1 bis 9, bei der in einer Axialschnittebene die stromaufwärtige Dichtungslippe (131, 331) und/oder die stromabwärtige Dichtungslippe (132, 332) stromabwärts um einen Winkel (A1, A2) ungleich Null in Bezug zur Radialrichtung geneigt ist.

11. Schaufel nach einem der Ansprüche 1 bis 9, bei der sich die stromaufwärtige Dichtungslippe (131, 331) und/oder die stromabwärtige Dichtungslippe (132, 332) im Wesentlichen in Radialrichtung erstreckt.

12. Strömungsmaschine, umfassend eine Schaufel (110, 310) nach einem der vorhergehenden Ansprüche.

## Claims

1. A turbomachine rotor blade having an outer part (114, 314) at its distal end (110B, 310B), the outer part comprising:
• a platform (120, 320) defining the outside surface of the passage for gas passing through the turbomachine and presenting first and second opposite side edges (151, 152, 351, 352); and
• upstream and downstream sealing wipers (131, 132, 331, 332) extending outwards from said platform (120, 320), each wiper extending between two lateral faces (131L, 132L, 331L, 332L) situated respectively at the first and second side edges (151, 152, 351, 352);
the blade (110, 310) being **characterized in that**:
the lateral faces (131L, 132L, 331L, 332L) of the upstream or downstream wiper (131, 132, 331, 332) are partially covered in an anti-wear material (160, 360, 460), only the inner zone these lateral faces (131L, 132L, 331L, 332L) being covered.

2. A blade according to claim 1, wherein each of the first and second side edges (351, 352) presents a profile between the upstream and downstream wipers (331, 332), which profile has a first portion (351A; 352A) close to the upstream wiper (331), an intermediate second portion (351B; 352B), and a third portion (351C; 352C) that is close to the downstream wiper (332), the first and third portions (351A, 351C; 352A, 352C) being substantially parallel to each other and the second portion (351B; 352B) extending obliquely between the first and third portions from upstream to downstream and from the suction side towards the pressure side of the blade.

3. A blade according to claim 2, wherein each of the first and second side edges (351, 352) presents an upstream end portion (351AA; 352AA) in line with the first portion (351A; 352A) and a downstream end portion (351CC; 352CC) in line with the third portion (351C; 352C).

4. A blade according to claim 2 or claim 3, wherein the first and third portions (351A, 351C; 352A, 352C) extend substantially perpendicularly to the wipers (331, 332).

5. A blade according to any one of claims 2 to 4, wherein the upstream wiper (331) flows upstream at a non-zero angle (A1) relative to the radial direction, each of the lateral faces (331L) of the upstream wiper joining the side edge (351, 352) of the platform in its intermediate portion (351B, 352B), and wherein the anti-wear material (360) covers each of the lateral faces (331L) of the upstream wiper, at least in part, and covers the intermediate portion (351B, 352B) of each side edge at least in part, such that the anti-wear material (360) situated on the suction side (CE) of the blade is exposed downstream whereas the anti-wear material situated on the pressure side (CI) of the blade is exposed upstream.

6. A blade according to claim 1, wherein each of the first and second side edges (151, 152) presents a profile between the upstream and downstream wipers (131, 132), which profile is generally U-shaped with a first portion (151A; 152A) close to the upstream wiper (131) and forming a first branch of the U-shape, an intermediate second portion (151B; 152B), forming the base of the U-shape, and a third portion (151C; 152C) close to the downstream wiper (132) and forming a second branch of the U-shape, the first and third portions (151A, 151C; 152A; 152C) diverging.

7. A blade according to claim 6, wherein the second portion (151B; 152B) extends substantially perpendicularly to the wipers (131, 132).

8. A blade according to claim 6 or claim 7, wherein the third portion (151C; 152C) is at least twice as long as the first portion (151A, 152A).

9. A blade according to any one of claims 1 to 8, wherein the lateral faces (131L, 331L) of the upstream wiper (131, 331) are covered in the anti-wear material (260, 360) .

10. A blade according to any one of claims 1 to 9, wherein the upstream and/or downstream wiper (131, 331; 132, 332) slopes upstream in an axial section plane at a non-zero angle (A1, A2) relative to the radial direction.

11. A blade according to any one of claims 1 to 9, in which the upstream and/or downstream wiper (131, 331; 132, 332) extends substantially in the radial direction.

12. A turbomachine including a blade (110, 310) according to any preceding claim.
